# EUROPEAN PATENT SPECIFICATION

(11) **EP 4 617 039 B1**
(45) Date of publication and mention of the grant of the patent: **06.05.2026**
(21) Application number: 24163567.1
(22) Date of filing: 14.03.2024
(51) Int. Cl.: B29C 45/33, B29C 45/26

(54) **MOULDING DEVICE**
FORMVORRICHTUNG
DISPOSITIF DE MOULAGE

(43) Date of publication of application: 17.09.2025
(73) Proprietor: ABATE BASILIO & C. S.N.C., 25011 Calcinato (IT)
(72) Inventor: ABATE, Davide, 25011 Calcinato (BS) (IT)
(74) Representative: Luppi Intellectual Property S.r.l.

(56) References cited:
- IT-A1- UA20 163 278
- KR-A- 20230 055 057
- US-A- 5 536 161

## Description

### Background of the invention

The present invention relates to an injection moulding device for plastics comprising mould split follower elements and provided with a device for centring and pre-loading the mould split follower elements; furthermore, the device is also configured to compensate for the wear of the mould split follower elements.

### State of the art

In the production of objects made of plastic material through injection moulding, a mould may be provided with split followers, movable during unmoulding, so as to able to provide objects with ultra-accentuated and deep undercuts; the split followers, in particular, contribute to defining a moulding cavity designed to be filled with the plastic material to be injected.

US5536161A and KR20230055057A discloses moulding devices having split followers. IT2020163278U discloses an injection mould for plastics with centring wear compensation device.

For a correct moulding, it is indispensable to ensure a perfect closing of the mould given that; otherwise, the produced object could have some imbalances and could be uneven in shape and size, in particular, it could have a thickness of the plastic material that is inhomogeneous, or failing to meet the required standards in any case; therefore, the various parts that form the mould, and in particular the split followers, have surfaces, called centring surfaces, which come into mutual contact when clamping the mould and they ensure the centring between the parts.

However, in recent years, there have been used increasingly resistant plastic materials, with progressively smaller wall thicknesses, and with higher pressure for injecting plastic material into the moulding cavity; therefore, there has been the need for using increasingly higher mould clamping forces.

However, the increase of clamping forces results in a greater friction between the centring surfaces, and therefore an accelerated wear phenomenon thereof. The operative effectiveness of the centring surfaces is therefore jeopardised prematurely; in other words, the centring surfaces are soon no longer able to perform the desired function. In the event of moulds provided with split followers, the latter are particularly affected by the wear out phenomenon mentioned above, and it is difficult to restore the correct positioning of the parts of the mould during the moulding cycle without external maintenance operations which could require rather long times.

In the light of the drawbacks outlined above, it would therefore be desirable to improve the current moulds for producing objects made of plastic material through injection moulding. In particular, it would be strongly desirable that moulds provided with split followers be provided with a device capable of easily and quickly compensating the wear out of the split followers, therefore ensuring the centring thereof; besides extending the life of the mould, this would also allow to avoid the undesired and long maintenance operations.

### Objects of the invention

An object of the present invention is to improve the current injection moulding devices.

Another object of the present invention is to provide an injection moulding device for plastics, provided with split followers, capable of easily and quickly compensating the wear out of the split followers.

A further object of the present invention is to provide a moulding device capable of ensuring high quality and dimensional precision of the moulded products over time.

A further object of the present invention is to provide an injection moulding device that reduces maintenance operations to the minimum.

Yet a further object of the present invention is to provide an injection moulding device provided with a significantly increased service life.

### Brief description of the drawings

These and other characteristics according to the present invention will be more apparent from the description that follows with reference to the attached drawings, in which:
Fig.1 is a cross-sectional partial view of a moulding device according to the invention, in a mould closing configuration;
Fig.2 is a perspective view of the moulding device Fig.1 with elements removed;
Fig.3 is a front view of Fig.2;
Fig.4 is a top view of Fig.2;
Fig.5 is a further front view of the moulding device of Fig. 1 with further elements removed;
Fig.6 is an enlarged detail of Fig.5.

### Detailed description of the invention

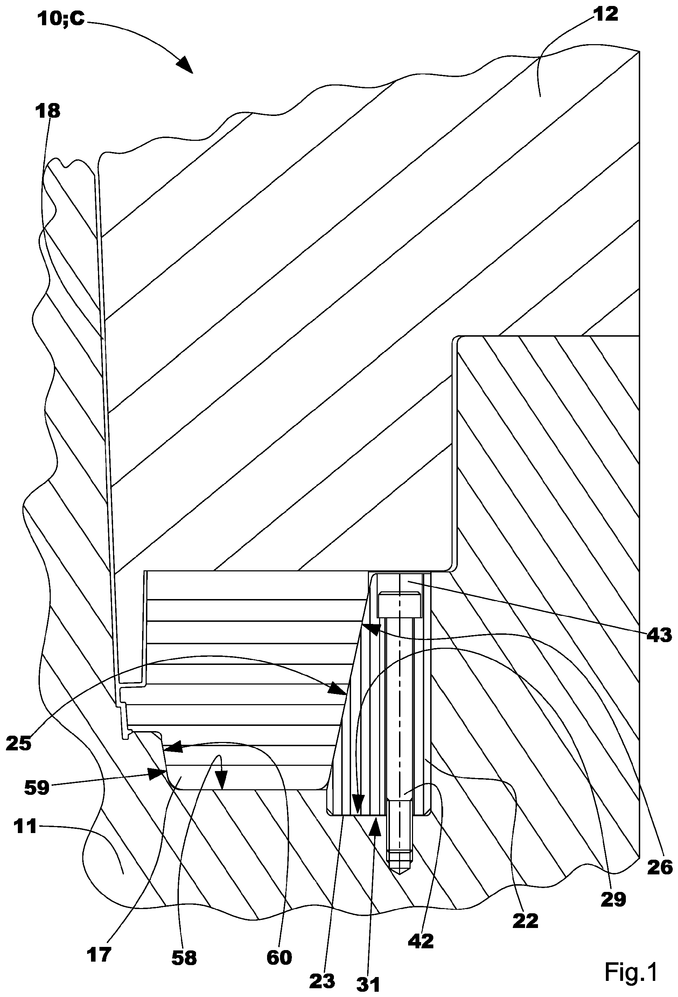

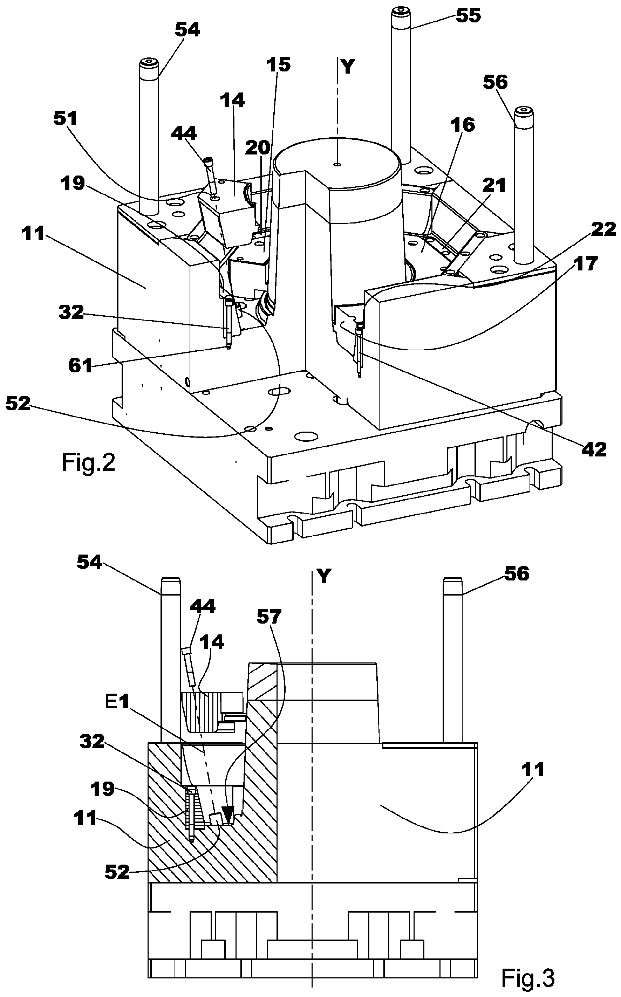

With reference to the Figures, there is shown an injection moulding device 10 for plastics, in particular for moulding containers, such as - by way of non-limiting example - containers for coatings. Fig.1 shows a portion of the injection moulding device 10 for plastics in a mould closing configuration C. The moulding device 10 comprises a first mould element 11 and a second mould element 12. In particular, as better shown in Figs.2-4, the first mould element 11 is connected to mould split follower elements 14-17.

The first mould element 11, the second mould element 12 and the mould split follower elements 14-17 contribute to define a moulding cavity 18 when the moulding device 10 is in the aforementioned mould closing configuration C.

The moulding cavity 18 has a longitudinal axis Y and at least one of the first mould element 11 and the second mould element 12 is movable along said longitudinal axis Y so as to allow the opening of the moulding device 10.

In particular, as shown in Figs.2,3 and 5, the moulding device 10 comprises column elements 54-56 parallel to the longitudinal axis Y to ensure the aligning of the first mould element 11 and of the second mould element 12 in the mould closing configuration C mentioned above.

Furthermore, as shown in Fig.3, each of the mould split follower elements 14-17 is movable with respect to the first mould element 11 along a respective extraction direction E1, which has a component parallel to the longitudinal axis Y and a component orthogonal to the longitudinal axis Y, so as to allow the unmoulding of the mould split follower elements 14-17.

Furthermore, the moulding device 10 is provided with a positioning device 19,23;20;21;22,24 configured to ensure the correct position of the mould split follower elements 14-17 in said mould closing configuration C.

In particular, the positioning device 19,23;20;21;22,24 comprises a plurality of centring and pre-loading wedge-shaped elements 19-22, also removably fixed on the first mould element 11, configured to centre and preload the mould split follower elements 14-17 with respect to the first mould element 11.

The positioning device 19,23;20;21;22,24 further comprises compensating and adjusting plate inserts 23,24 configured to compensate for the wear generated by the contact between each of the wedge-shaped elements 19-22 and the mould split follower elements 14-17 and to adjust the position of each of the wedge-shaped elements 19-22 with respect to the first mould element 11.

With reference to Fig.1, each wedge-shaped element 19;20;21;22 and the respective mould split follower elements 14;15;16;17 comprise mutually opposite centring surfaces 25,26. In detail, the centring surfaces 25,26 are tilted with respect to the longitudinal axis Y and configured to come into mutual contact in the mould closing configuration C. Even more particularly, the centring surfaces 25,26 are tilted in a divergent manner according to a removal direction with respect to the first mould element 11.

Furthermore, the centring surfaces 25,26 are subjected to specific thermal treatments to acquire physical/mechanical characteristics, in particular hardness values and molecular configurations such to minimise wear and extend the service life of the components. In this manner, furthermore, the operating useful time of the moulding device 10 before the need for downtime to correct a centring is increased.

In addition, each of the mould split follower elements 14-17 and the first mould element 11 comprise respective mutually opposite contact surfaces 59,60 that, in the mould closing configuration C, are in mutual contact. In particular, the wedge-shaped elements 19-22 exert a constraining reaction on the mould split follower elements 14-17 which has a component orthogonal to the longitudinal axis Y, therefore ensuring contact between respective contact surfaces 59,60 in the mould closing configuration C.

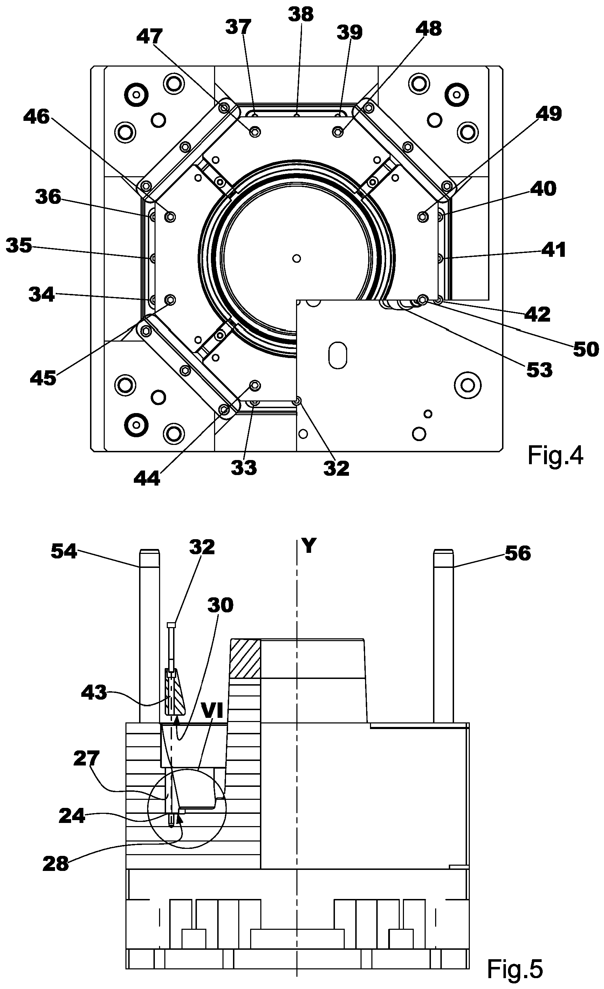

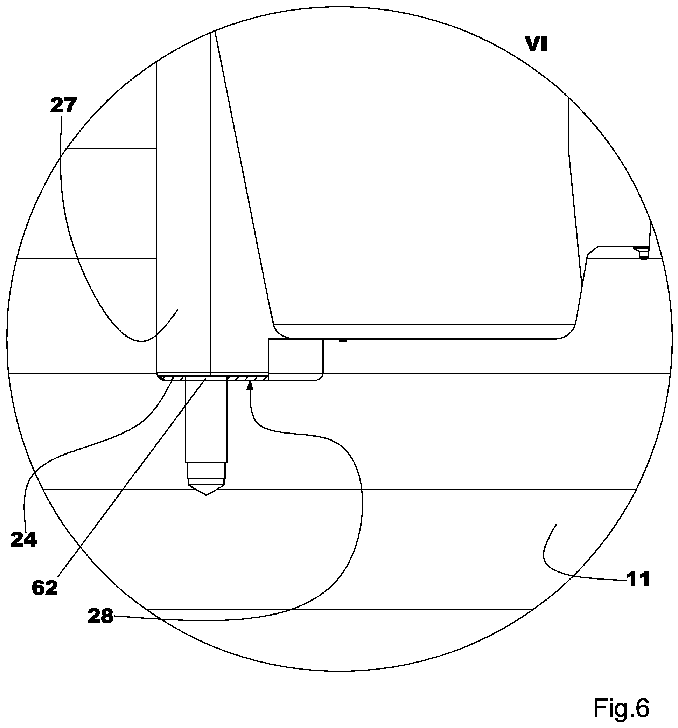

In detail, as shown in Figs.5 and 6, the first mould element 11 is provided with housing seats 27 configured to house respective wedge-shaped elements 19-22.

With reference to Figs.1,5 and 6, the housing seats 27 comprise bottom surfaces 28,29 that are flat and orthogonal to the longitudinal axis Y which are shaped to restingly receive respective compensating and adjusting plate inserts 23,24; in particular, the latter are interposed - if required - between base surfaces 30,31 of the respective wedge-shaped elements 19-22 and the bottom surfaces 28,29.

As shown in Figs.1-5, the centring and pre-loading wedge-shaped elements 19-22 are removably fixed inside the housing seats 27 using screw fixing elements 32-42, each of which extends in a through hole 43 obtained in the respective wedge-shaped element 19;20;21;22 and, as better shown in Fig.6, in one or more through holes 62 obtained in one or more of the interposed plate inserts 23,34.

Each screw fixing element 32-42 can be screwed into a threaded hole 61 made on a respective bottom surface 28,29 of the housing seats 27. In particular, the through hole 43 extends parallel to the longitudinal axis Y.

At the same time, as shown in Figs. 1-4, the mould split follower elements 14-17 are connected to the first mould element 11 by means of screw connecting elements 44-50, which are inserted into respective cavities 51 obtained inside the mould split follower elements 14-17; the screw connecting elements 44-50 are fixed to respective fixing elements 52,53 arranged on the first mould element 11.

The first mould element 11 is further provided with flat resting surfaces 57,58 to restingly receive the mould split follower elements 14-17. In detail, the bottom surfaces 28,29 are arranged at a height, along the longitudinal axis Y, that is different with respect to the flat resting surfaces 57,58. Even in greater detail, the bottom surfaces 28,29 are arranged at a farther distance from the second mould element 12 with respect to the flat resting surfaces 57,58 in the mould closing configuration C.

As shown in detail in Fig.1 the top surface of the mould split follower elements 14-17 lies on a plane that is more distant from the bottom surfaces 28,29 than the top surface of the wedge-shaped elements 19-22.

Described below is an operation for adjusting the centring of the mould split follower elements 14-17 of the moulding device 10 described above. In particular, there shall be considered the case in which there arise the need to adjust the centring of one of the mould split follower elements 14-17 given that, due to use, the centring surfaces 25,26 of said mould split follower elements 14;15;16;17 and of the respective wedge-shaped element 19;20;21;22 are not in contact in the mould closing configuration C.

Firstly, the second mould element 12 is moved away along a direction parallel to the longitudinal axis Y from the first mould element 11, so as to make the mould split follower elements 14-17 and in particular the one to be centred which, for the sake of simplicity, will be renamed as "split follower to be centred", accessible.

Subsequently, the screw connecting elements 44-50 which connected the split follower to be centred to the first mould element 11 are extracted; the split follower to be centred is therefore extracted along the respective extraction direction E1.

Then, the screw fixing elements 32-42 which fix the wedge-shaped element 19;20;21;22 corresponding to the split follower to be centred - to the first mould element 11 are then removed; lastly, the latter is extracted from the from the respective housing seat so as to make the bottom surface thereof - and, if necessary, the plate inserts 23,24 which had been interposed - accessible. Hereinafter, the wedge-shaped element 19;20;21;22 corresponding to the split follower to be centred will be renamed as "wedge-shaped element to be repositioned"

At this point one or more further plate inserts 23,24 can be added, or one of those that had been interposed can be replaced with oner having a greater thickness.

As a matter of fact, a change in the thickness or in the number of plate inserts 23,24 results in a change in the positioning of the wedge-shaped element to be repositioned. In particular, the centring surface of the wedge-shaped element to be repositioned is made to slide along the longitudinal axis Y until the contact with the centring surface of the split follower to be centred in the mould closing configuration C is ensured once again.

In the light of the above, it is clear that the moulding device 10 according to the invention successfully attains all the pre-established objects.

It is clear that, thanks to the particular structural and functional configuration, in particular thanks to the geometric shape described above, the solution according to the invention allows a fine adjustment of the alignment between the centring surfaces 25,26.

Furthermore, the wear is compensated for easily and quickly: this allows to ensure the centring of the mould split follower elements 14-17, extending the service life of the moulding device 10 and avoiding undesired and long maintenance operations.

In addition, high quality and dimensional precision of the moulded products are ensured over time.

The moulding device 10 or parts thereof may be subjected to modifications or variants, without departing from the scope of protection of the claims.

## Claims

1. Injection moulding device (10) for plastics comprising a first mould element (11), to which mould split follower elements (14-17) are connected, and a second mould element (12), together defining a moulding cavity (18) having a longitudinal axis (Y), at least one of said first mould element (11) and second mould element (12) being movable along said longitudinal axis (Y) between a mould opening configuration and a mould closing configuration (C), each of said mould split follower elements (14-17) being movable with respect to said first mould element (11) along a respective extraction direction (E1) having a component parallel to said longitudinal axis (Y) and a component that is orthogonal to said longitudinal axis (Y);
**characterised in that** it further comprises a positioning device (19,23;20;21;22,24) configured to ensure the correct position of said mould split follower elements (14-17) in said mould closing configuration (C), wherein said positioning device (19,23;20;21;22,24) comprises:
- a plurality of centring and preloading wedge-shaped elements (19-22) fixed removably to said first mould element (11) and configured to centre and preload said mould split follower elements (14-17) with respect to said first mould element (11) and
- compensating and adjusting plate inserts (23,24) configured to compensate for the wear generated by the contact between each of said centring and preloading wedge-shaped elements (19-22) and said mould split follower elements (14-17) and to adjust the position of each of said centring and preloading wedge-shaped elements (19-22) with respect to said first mould element (11),
**in that** each centring and preloading wedge-shaped element (19;20;21;22) and the respective mould split follower element (14;15;16;17) comprise mutually opposite centring surfaces (25,26), which are tilted with respect to said longitudinal axis (Y) and configured to come mutually into contact in said mould closing configuration (C), and wherein on said first mould element (11) housing seats (27) are obtained that are configured to house respective centring and preloading wedge-shaped elements (19-22), wherein said housing seats (27) comprise bottom surfaces (28,29) that are flat and orthogonal to said longitudinal axis (Y) and shaped to restingly receive respective compensating and adjusting plate inserts (23, 24), said compensating and adjusting plate inserts (23,24) being interposed between base surfaces (30,31) of said respective centring and preloading wedge-shaped elements (19-22) and said bottom surfaces (28,29),
**in that** said wedge-shaped elements (19-22) are configured to exert a constraining reaction on said mould split follower elements (14-17) which has a component orthogonal to said longitudinal axis (Y), and
**in that** each of said mould split follower elements (14-17) and said first mould element (11) comprise respective mutually opposite contact surfaces (59,60) that, in said mould closing configuration (C), are in a mutual contact ensured by said constraining reaction.

2. Injection moulding device (10) according to the preceding claim, wherein said wedge-shaped elements (19-22) and said plate inserts (23, 24) are fixed removably to said first mould element (11) inside said housing seats (27) by means of screw fixing elements (32-42), each extending in a through hole (43) obtained in a respective wedge-shaped element (19;20;21;22) and in one or more through holes (62) obtained in one or more of said interposed plate inserts (23,34), each of said screw fixing elements (32-42) being screwable into a threaded hole (61) made on a respective bottom surface (28,29) of said housing seats (27), said through hole (42) extending parallel to said longitudinal axis (Y).

3. Injection moulding device (10) according to claim 1 or 2, wherein said mould split follower elements (14-17) are connected to said first mould element (11) by means of screw connecting elements (44-50) inserted inside respective cavities (51) obtained inside said mould split follower elements (14-17) and fixed removably to respective fixing elements (52,53) arranged on said first mould element (11).

4. Injection moulding device (10) according to any one of the preceding claims, comprising column elements (54-56) parallel to said longitudinal axis (Y) suitable for ensuring the alignment of said first mould element (11) and said second mould element (12) in said mould closing configuration (C).

5. Injection moulding device (10) according to any one of the preceding claims, wherein said centring surfaces (25,26) are tilted in a manner that is divergent according to a removal direction with respect to said first mould element (11).

6. Injection moulding device (10) according to any one of the preceding claims, wherein said first mould element (11) is provided with flat resting surfaces (57,58) for restingly receiving said mould split follower elements (14-17), and wherein said bottom surfaces (28,29) are arranged at a height, along said longitudinal axis (Y), that is different with respect to said flat resting surfaces (57,58).

7. Injection moulding device (10) according to claim 6, wherein said bottom surfaces (28,29) are arranged at a farther distance from said second mould element (12) with respect to said flat resting surfaces (57,58) in said mould closing configuration (C).

8. Injection moulding device (10) according to any one of the preceding claims, wherein the top surface of said mould split follower elements (14-17) lies on a plane that is more distant from said bottom surfaces (28,29) than the top surface of said wedge-shaped elements (19-22).

9. Injection moulding device (10) according to any one of the preceding claims, wherein said wedge-shaped elements (19-22) exert a constraining reaction on said mould split follower elements (14-17), having a component that is orthogonal to said longitudinal axis (Y) to ensure the contact between said respective contact surfaces (59,60) in said mould closing configuration (C).

## Patentansprüche

1. Spritzgießvorrichtung (10) für Kunststoffe, umfassend ein erstes Formelement (11), mit dem Formteilungsfolgeelemente (14-17) verbunden sind, und ein zweites Formelement (12), die zusammen einen Formhohlraum (18) mit einer Längsachse (Y) definieren, wobei mindestens eines von dem ersten Formelement (11) und dem zweiten Formelement (12) entlang der Längsachse (Y) zwischen einer Formöffnungskonfiguration und einer Formschließkonfiguration (C) bewegbar ist, wobei jedes der Formteilungsfolgeelemente (14-17) bezüglich des ersten Formelements (11) entlang einer jeweiligen Entnahmerichtung (E1) bewegbar ist, die eine Komponente parallel zu der Längsachse (Y) und eine Komponente aufweist, die orthogonal zu der Längsachse (Y) ist;
**dadurch gekennzeichnet, dass** sie ferner eine Positionierungsvorrichtung (19,23;20;21;22,24) umfasst, die dazu konfiguriert ist, die korrekte Position der Formteilnachfolgeelemente (14-17) in der Formschließkonfiguration (C) sicherzustellen, wobei die Positionierungsvorrichtung (19,23;20;21;22,24) umfasst:
- eine Vielzahl von zentrierenden und vorspannenden keilförmigen Elementen (19-22), die lösbar an dem ersten Formelement (11) befestigt und dazu ausgelegt sind, die geteilten Formfolgeelemente (14-17) in Bezug auf das erste Formelement (11) zu zentrieren und vorzuspannen, und
- Ausgleichs- und Justierplatteneinsätze (23,24), die dazu konfiguriert sind, den durch den Kontakt zwischen jedem der Zentrierungs- und Vorspannungskeilelemente (19-22) und der Formteilungsfolgelemente (14-17) erzeugten Verschleiß auszugleichen und die Position jedes der Zentrierungs- und Vorspannungskeilelemente (19-22) in Bezug auf das erste Formelement (11) zu justieren,
dadurch, dass jedes Zentrierungs- und Vorspannungskeilelement (19;20;21;22) und das jeweilige Formteilungsfolgeelement (14; 15; 16; 17) sich gegenseitig gegenüberliegende Zentrierungsflächen (25,26) umfassen, die in Bezug auf die Längsachse (Y) geneigt und dazu ausgelegt sind, in der Formschließkonfiguration (C) gegenseitig in Kontakt zu kommen, und wobei an dem ersten Formelement (11) Aufnahmesitze (27) erhalten werden, die dazu ausgelegt sind, jeweilige Zentrierungs- und Vorspannungskeilelemente (19-22) aufzunehmen, wobei die Aufnahmesitze (27) Bodenflächen (28,29) umfassen, die flach und orthogonal zu der Längsachse (Y) sind und dazu geformt sind, jeweilige Kompensations- und Einstellplatteneinsätze (23, 24) aufliegend aufzunehmen, wobei die Kompensations- und Einstellplatteneinsätze (23,24) zwischen Basisflächen (30,31) der jeweiligen Zentrierungs- und Vorspannungskeilelemente (19-22) und den Bodenflächen (28,29) zwischengeordnet sind,
wobei die keilförmigen Elemente (19-22) dazu ausgelegt sind, eine Zwangsreaktion auf die Formteilungsfolgeelemente (14-17) auszuüben, die eine Komponente orthogonal zu der besagten Längsachse (Y) aufweist, und
dadurch, dass jedes der Formteilungsfolgeelemente (14-17) und das erste Formelement (11) jeweilige einander gegenüberliegende Kontaktflächen (59,60) umfassen, die in der Formschließkonfiguration (C) in einem gegenseitigen Kontakt stehen, der durch die Zwangsreaktion gewährleistet wird.

2. Spritzgießvorrichtung (10) nach dem vorhergehenden Anspruch, wobei die keilförmigen Elemente (19-22) und die Platteneinsätze (23,24) lösbar an dem ersten Formelement (11) innerhalb der Gehäusesitze (27) mittels Schraubenbefestigungselementen (32-42) befestigt sind, die sich jeweils in einer Durchgangsbohrung (43) erstrecken, die in einem jeweiligen keilförmigen Element (19;20;21;22) und in einer oder mehreren Durchgangsbohrungen (62) erhalten ist, die in einem oder mehreren der dazwischenliegenden Platteneinsätze (23,34) erhalten sind, wobei jedes der Schraubenbefestigungselemente (32-42) in eine Gewindebohrung (61) einschraubbar ist, die auf einer jeweiligen Bodenoberfläche (28,29) der Gehäusesitze (27) hergestellt ist, wobei sich die Durchgangsbohrung (42) parallel zu der Längsachse (Y) erstreckt.

3. Spritzgießvorrichtung (10) nach Anspruch 1 oder 2, wobei die Formteilungsfolgeelemente (14-17) mit dem ersten Formelement (11) mittels Schraubenverbindungselementen (44-50) verbunden sind, die in entsprechende Hohlräume (51) eingesetzt sind, die innerhalb der Formteilungsfolgeelemente (14-17) erhalten sind und lösbar an entsprechenden Befestigungselementen (52,53) befestigt sind, die an dem ersten Formelement (11) angeordnet sind.

4. Spritzgießvorrichtung (10) nach einem der vorhergehenden Ansprüche, umfassend Säulenelemente (54-56) parallel zu der Längsachse (Y), die geeignet sind, die Ausrichtung des ersten Formelements (11) und des zweiten Formelements (12) in der Formschließkonfiguration (C) sicherzustellen.

5. Spritzgießvorrichtung (10) nach einem der vorhergehenden Ansprüche, wobei die Zentrierflächen (25,26) in einer Weise geneigt sind, die in Bezug auf das erste Formelement (11) divergent gemäß einer Entnahmerichtung ist.

6. Spritzgießvorrichtung (10) nach einem der vorhergehenden Ansprüche, wobei das erste Formelement (11) mit flachen Auflageflächen (57,58) versehen ist zum aufliegenden Aufnehmen der Formteilfolgeelemente (14-17), und wobei die Bodenflächen (28,29) in einer Höhe entlang der Längsachse (Y) angeordnet sind, die sich von den flachen Auflageflächen (57,58) unterscheidet.

7. Spritzgießvorrichtung (10) nach Anspruch 6, wobei die Bodenflächen (28,29) in der Formschließkonfiguration (C) in einem größeren Abstand von dem zweiten Formelement (12) angeordnet sind als die flachen Auflageflächen (57,58).

8. Spritzgießvorrichtung (10) nach einem der vorhergehenden Ansprüche, wobei die obere Oberfläche der Formteilungsfolgeelemente (14-17) auf einer Ebene liegt, die weiter von den unteren Oberflächen (28,29) entfernt ist als die obere Oberfläche der keilförmigen Elemente (19-22).

9. Spritzgießvorrichtung (10) nach einem der vorhergehenden Ansprüche, wobei die keilförmigen Elemente (19-22) eine Zwangsreaktion auf die Formteilungsfolgeelemente (14-17) ausüben, die eine Komponente aufweist, die orthogonal zu der Längsachse (Y) ist, um den Kontakt zwischen den jeweiligen Kontaktflächen (59,60) in der Formschließkonfiguration (C) sicherzustellen.

## Revendications

1. Dispositif de moulage par injection (10) pour matières plastiques, comprenant un premier élément de moule (11), auquel des éléments suiveurs de division de moule (14-17) sont reliés, et un second élément de moule (12), définissant ensemble une cavité de moulage (18) ayant un axe longitudinal (Y), au moins l'un parmi ledit premier élément de moule (11) et ledit second élément de moule (12) étant mobile le long dudit axe longitudinal (Y) entre une configuration d'ouverture de moule et une configuration de fermeture de moule (C), chacun desdits éléments suiveurs de division de moule (14-17) étant mobile par rapport audit premier élément de moule (11) le long d'une direction d'extraction (El) respective ayant un composant parallèle audit axe longitudinal (Y) et un composant qui est orthogonal audit axe longitudinal (Y) ;
**caractérisé en ce qu'**il comprend en outre un dispositif de positionnement (19, 23 ;20 ;21 ;22, 24) conçu pour assurer la position correcte desdits éléments suiveurs de division de moule (14-17) dans ladite configuration de fermeture de moule (C), dans lequel ledit dispositif de positionnement (19, 23 ;20 ;21 ;22,24) comprend :
- une pluralité d'éléments cunéiformes de centrage et de préchargement (19-22) fixés de manière amovible audit premier élément de moule (11) et conçus pour centrer et précharger lesdits éléments suiveurs de division de moule (14-17) par rapport audit premier élément de moule (11), et
- compenser et ajuster des inserts de plaque (23, 24) conçus pour compenser l'usure générée par le contact entre chacun desdits éléments cunéiformes de centrage et de préchargement (19-22) et lesdits éléments suiveurs de division de moule (14-17) et pour régler la position de chacun desdits éléments cunéiformes de centrage et de préchargement (19-22) par rapport audit premier élément de moule (11),
**en ce que** chaque élément cunéiforme de centrage et de préchargement (19 ;20 ;21 ;22) et l'élément suiveur de division de moule respectif (14 ; 15 ; 16 ; 17) comprennent des surfaces de centrage (25, 26) mutuellement opposées, qui sont inclinées par rapport audit axe longitudinal (Y) et conçues pour venir en contact mutuellement dans ladite configuration de fermeture de moule (C), et dans lequel sur ledit premier élément de moule (11) des sièges de logement (27) sont obtenus qui sont conçus pour loger des éléments cunéiformes de centrage et de préchargement respectifs (19-22), dans lequel lesdits sièges de boîtier (27) comprennent des surfaces inférieures (28, 29) qui sont plates et orthogonales audit axe longitudinal (Y) et formées pour recevoir au repos des inserts de plaque de compensation et d'ajustement respectifs (23, 24), lesdits inserts de plaque de compensation et d'ajustement (23, 24) étant interposés entre des surfaces de base (30, 31) desdits éléments cunéiformes de centrage et de préchargement respectifs (19-22) et lesdites surfaces inférieures (28, 29),
**en ce que** lesdits éléments cunéiformes (19-22) sont conçus pour exercer une réaction contraignante sur lesdits éléments suiveurs de division de moule (14-17) qui a un composant orthogonal audit axe longitudinal (Y), et
**en ce que** chacun desdits éléments suiveurs de division de moule (14-17) et ledit premier élément de moule (11) comprennent des surfaces de contact respectives mutuellement opposées (59, 60) qui, dans ladite configuration de fermeture de moule (C), sont en contact mutuel assuré par ladite réaction de contrainte.

2. Dispositif de moulage par injection (10) selon la revendication précédente, dans lequel lesdits éléments cunéiformes (19-22) et lesdits inserts de plaque (23, 24) sont fixés de manière amovible audit premier élément de moule (11) à l'intérieur desdits sièges de boîtier (27) au moyen d'éléments de fixation à vis (32-42), chacun s'étendant dans un trou traversant (43) obtenu dans un élément cunéiforme respectif (19 ;20 ;21 ;22) et dans un ou plusieurs trous traversants (62) obtenus dans un ou plusieurs desdits inserts de plaques interposés (23, 34), chacun desdits éléments de fixation à vis (32-42) pouvant être vissé dans un trou fileté (61) réalisé sur une surface inférieure respective (28, 29) desdits sièges de logement (27), ledit trou traversant (42) s'étendant parallèle audit axe longitudinal (Y).

3. Dispositif de moulage par injection (10) selon la revendication 1 ou 2, dans lequel lesdits éléments suiveurs de division de moule (14-17) sont reliés audit premier élément de moule (11) au moyen d'éléments de liaison par vis (44-50) insérés à l'intérieur de cavités respectives (51) obtenues à l'intérieur desdits éléments suiveurs de division de moule (14-17) et fixés de manière amovible à des éléments de fixation respectifs (52, 53) agencés sur ledit premier élément de moule (11).

4. Dispositif de moulage par injection (10) selon l'une quelconque des revendications précédentes, comprenant des éléments de colonne (54-56) parallèles audit axe longitudinal (Y) aptes à assurer l'alignement dudit premier élément de moule (11) et dudit second élément de moule (12) dans ladite configuration de fermeture de moule (C).

5. Dispositif de moulage par injection (10) selon l'une quelconque des revendications précédentes, dans lequel lesdites surfaces de centrage (25, 26) sont inclinées de manière à diverger selon une direction de retrait par rapport audit premier élément de moule (11).

6. Dispositif de moulage par injection (10) selon l'une quelconque des revendications précédentes, dans lequel ledit premier élément de moule (11) est pourvu de surfaces de repos plates (57, 58) destinées à recevoir au repos lesdits éléments suiveurs de division de moule (14-17), et dans lequel lesdites surfaces inférieures (28, 29) sont disposées à une hauteur, le long dudit axe longitudinal (Y), qui est différente par rapport auxdites surfaces de repos plates (57, 58).

7. Dispositif de moulage par injection (10) selon la revendication 6, dans lequel lesdites surfaces inférieures (28, 29) sont disposées à une distance plus éloignée dudit second élément de moule (12) par rapport auxdites surfaces de repos plates (57, 58) dans ladite configuration de fermeture de moule (C).

8. Dispositif de moulage par injection (10) selon l'une quelconque des revendications précédentes, dans lequel la surface supérieure desdits éléments suiveurs de division de moule (14-17) se trouve sur un plan qui est plus éloigné desdites surfaces inférieures (28, 29) que la surface supérieure desdits éléments cunéiformes (19-22).

9. Dispositif de moulage par injection (10) selon l'une quelconque des revendications précédentes, dans lequel lesdits éléments cunéiformes (19-22) exercent une réaction contraignante sur lesdits éléments suiveurs de division de moule (14-17), ayant un composant qui est orthogonal audit axe longitudinal (Y) pour assurer le contact entre lesdites surfaces de contact respectives (59, 60) dans ladite configuration de fermeture de moule (C).
